# EUROPÄISCHE PATENTSCHRIFT

(11) **EP 2 082 297 B1**
(45) Veröffentlichungstag und Bekanntmachung des Hinweises auf die Patenterteilung: **25.09.2013**
(21) Anmeldenummer: 07821327.9
(22) Anmeldetag: 15.10.2007
(51) Int. Cl.: G05B 19/042, G05B 19/05

(54) **PROZESSAUTOMATISIERUNGSSYSTEM ZUR BESTIMMUNG, ZUR ÜBERWACHUNG UND/ODER ZUM BEEINFLUSSEN VON UNTERSCHIEDLICHEN PROZESSGRÖßEN UND/ODER ZUSTANDSGRÖßEN**
PROCESS AUTOMATION SYSTEM FOR DETERMINING, FOR MONITORING AND/OR FOR INFLUENCING DIFFERENT PROCESS VARIABLES AND/OR STATE VARIABLES
SYSTÈME D'AUTOMATISATION DE PROCESSUS POUR DÉTERMINER, SURVEILLER ET/OU AGIR SUR DIFFÉRENTES GRANDEURS DU PROCESSUS ET/OU GRANDEURS D'ÉTAT

(30) Priorität: 25.10.2006 DE 102006051102
(43) Veröffentlichungstag der Anmeldung: 29.07.2009
(73) Patentinhaber: Endress+Hauser GmbH+Co. KG, 79689 Maulburg (DE)
(72) Erfinder: GOMMLICH, Andreas, 76185 Karlsruhe (DE); SPANKE, Dietmar, 79585 Steinen (DE); WITTMER, Detlev, 75433 Maulbronn (DE); BOGUHN, Dirk, 81245 München (DE); HERWIG, Jörg, 79400 Kandern (DE); RÖMER, Matthias, 35305 Grünberg (DE)
(74) Vertreter: Andres, Angelika Maria
(86) Internationale Anmeldenummer: PCT/EP2007/060960
(87) Internationale Veröffentlichungsnummer: WO 2008/049753

(56) Entgegenhaltungen:
- DE-A1- 10 255 288
- DE-A1- 19 949 994
- DE-A1-102004 012 420
- GB-A- 2 046 476
- JP-A- 57 059 203
- JP-A- 57 182 203
- US-A- 5 799 205
- US-A1- 2006 041 323
- US-E- R E36 263

## Beschreibung

Die vorliegende Erfindung betrifft ein Prozessautomatisierungssystem zur Bestimmung, zur Überwachung und/oder zum Beeinflussen von unterschiedlichen Prozessgrößen und/oder Zustandsgrößen in zumindest einem verfahrenstechnischen oder analytischen Prozess mit zumindest einer Leitstelle und einer Vielzahl von Feldgeräten, die die Prozessgrößen und/oder Zustandsgrößen messen, überwachen oder beeinflussen.

Grundlegende Fortschritte in der Mikroelektronik und der Sensortechnik in haben in den letzten Jahren zu einer Miniaturisierung von Feldgeräte und zu einer Integration der Funktionalitäten in den Feldgeräten geführt, die in der Automatisierungstechnik eine effektive und kostengünstige Anwendung von integrierten dezentralen Systemen bewirkt hat. In diesen Sensoren und diesen Aktoren werden nicht nur die Messwerte ermittelt, sondern die Messwerte werden schon im Sensor oder im Aktor vorverarbeitet, linearisiert und gegebenenfalls wird eine Selbstdiagnosen des Sensors oder des Aktors durchgeführt. Die Vorraussetzung für das Einbringen dieser dezentralen Funktionalitäten in ein geschlossenes Automatisierungskonzept mit "intelligenten" Sensoren und Aktoren ist ein erhöhter Informations- und Datenaustausch dieser dezentralen Einheiten untereinander und/oder mit einer Leitstelle. In der Prozessautomatisierungstechnik sind aus diesem Grund in den letzten Jahren eine Fülle von Feldbussystemen entstanden, die entweder firmenspezifische Anwendungsbereiche (z.B. BITBUS, CAN, MODBUS, RACKBUS) abdecken oder solche, die einer internationalen Normung (z.B. HART, PROFIBUS-PA, Foundation FIELDBUS, Ethernet) unterliegen. Auf die große Anzahl von Feldbussystemen, die derzeit in der industriellen Automatisierungstechnik und Prozessleittechnik zum Einsatz kommen, wird nicht explizit eingegangen und folglich nur noch mit dem allgemeingültigen Begriff "Feldbus" bezeichnet.

Gegenwärtig werden für Messanordnungen, die mindestens einen Sensor und/oder einen Messumformer umfassen, eine Vielzahl von Diagnosefunktionen bereitgestellt. So gehört heute die Diagnose und Überwachung von Mess- oder Zustandsgrößen mittels Wam- und Alarmgrenzwerten eines Minimal- und Maximalwertes zum Stand der Technik.

Für die Diagnose einzelner Attribute sind Verfahren bzw. Feldmessgeräte bekannt, die eine Aussage über die Funktionsfähigkeit des Feldmessgerätes oder seine zu erwartende verbleibende Lebensdauer erlauben, wie dies beispielsweise in der Offenlegungsschrift DE 102 55 288 A1 offenbart ist. Dies ermöglicht eine Vorhersage des Zeitpunktes, wann die maximale Lebensdauer des Feldgeräts voraussichtlich erreicht ist. Aus zusätzlich neben der Prozessvariablen erfassten Einflussgrößen und aus der Abschätzung von deren Einfluss auf Lebensdauer oder Funktionsfähigkeit des Feldgeräts und/oder einzelner Module bzw. Komponenten davon kann eine Aussage über die verbleibende Lebensdauer gewonnen werden.

In der Offenlegungsschrift DE 10 2004 340 042 A1 wird anhand eines Zugriffszähler eine Restlebensdauerprognose für den Datenspeicher eines Feldgeräts berechnet.

Die Offenlegungsschrift DE 10 2004 012 420 A1 berücksichtigt darüber hinaus auch die aktuellen Eigenschaften der Messumgebung sowie die Historie der Prozesskonditionen. In Abhängigkeit eines Belastungsmodells ist somit eine Bewertung der bereits erfolgten Belastung des Messsystems möglich. Basierend auf dieser Bewertung lassen sich Aussagen über die verbleibende Standzeit des Systems ableiten. In dieser Druckschrift werden nur zwei lokal im Feldgerät ermittelte Messgrößen (pH-Wert, Temperatur) betrachtet, die zur Diagnose hinsichtlich der Belastung des Sensors herangezogen werden.
Wenngleich die genannten Vorgehensweisen bereits ein gewisses Maß an Diagnosefähigkeit ermöglichen, ist eine verbesserte Kenntnis über den qualitativen Zustand einer Messanordnung im Messbetrieb wünschenswert.

Die Offenlegungsschrift US RE 36,263 beschreibt eine programmierbare logische Steuerungen, die einen Bildspeicher besitzen, der Register und Adressen aufweist, die derart zugewiesen sind, dass sie den Zustand verschiedener Sensoren wiedergeben, die die Werkzeugmaschine überwachen. Die Daten bzw. Informationen von den Sensoren, die von der programmierbaren logischen Steuerung empfangen werden, werden in bestimmten Registem gespeichert, und die Verarbeitungsbefehle in der programmierbaren logischen Steuerung bearbeiten die Informationen bzw, die Daten, die sich in dem Bildspeicher befinden. Es soll dadurch erreicht werden, eine schnelle Verbindung zwischen den Bildspeicherbereichen verschiedener, miteinander arbeitender programmierbarer logischer Steuerungen zu erzeugen. Dadurch kann jede programmierbare logische Steuerung einen Bereich einer sequentiellen Befehlsreihe bearbeiten, und die von jeder programmierbaren logischen Steuerung erzielte Lösung kann zu einem Zeitpunkt, der praktisch gleichzeitig zu der Lösung auftritt, in den Bildspeicherbereichen der anderen programmierbaren logischen Steuerungen erscheinen.

Aufgrund der dezentralen Verteilung der einzelnen Prozesskomponenten bzw. Feldgeräten in einem Prozessautomatisierungssystems ist es notwendig, dass Informationen und Messwerte der einzelnen Feldgeräte zwecks Diagnose und Analyse der Feldgeräte und deren Messwerte allen weiteren Prozesskomponenten eines Prozesses und/oder der Leitstelle beispielsweise über den Feldbus weitergeleitet werden.

Die Aufgabe der Erfindung ist es, ein dezentrales Prozessautomatisierungssystem aufzuzeigen, das jedem Feldgerät eines Prozesses die gesamte, ermittelte Information über diesen Prozess zur Verfügung stellt.

Zur Lösung der Aufgabe wird ein Prozessautomatisierungssystem zur Bestimmung, zur Überwachung und/oder zum Beeinflussen von unterschiedlichen Prozessgrößen und/oder Zustandsgrößen in zumindest einem verfahrenstechnischen oder analytischen Prozess mit zumindest einer Leitstelle und einer Vielzahl von Feldgeräten, die die Prozessgrößen und/oder Zustandsgrößen messen, überwachen oder beeinflussen, wobei in jedem Feldgerät zumindest ein Sensor zum Ermitteln eines Messwerts einer bestimmten Prozessgröße und/oder Zustandsgröße und/oder ein Aktor zum Beeinflussen einer bestimmten Prozessgröße und/oder Zustandsgröße mittels eines Stellwerts vorgesehen ist, wobei jedes Feldgerät, die zyklisch oder azyklisch ermittelten, messgerätespezifischen Messwerte und/oder Stellwerte der Prozessgröße und/oder Zustandsgröße jedem weiteren Feldgerät des Prozessautomatisierungssystems zur Verfügung stellt, so dass jedem Feldgerät alle ermittelten Messwerte und/oder Stellewerte des verfahrenstechnischen oder analytischen Prozesses als Information verfügbar sind, wobei die jeweils aktuelle Information aller ermittelten Messwerte und/oder Stellwerte der Prozessgrößen und/oder Zustandsgrößen jedem Feldgerät als ein aktueller Prozesszustandsvektor zur Verfügung steht, wobei ein digitaler Feldbus vorgesehen ist, über den die Feldgeräte mit der Leitstelle und untereinander kommunizieren, wobei jedes der Feldgeräte die von den anderen Feldgeräten des verfahrenstechnischen oder analytischen Prozesses auf dem digitalen Feldbus bereitgestellten Messwerte und/oder Stellwerte kontinuierlich oder zyklisch mitliest und diese mitgelesenen Messwerte und/oder mitgelesenen Stellwerte als Information an vorgegebener Stelle im Prozesszustandsvektor aufgrund einer einheitlichen Anordnung der einzelnen, unterschiedlichen Messwerte und/oder Stellwerte im Prozesszustandvektor eindeutig identifizierbar abspeichert, wobei eine Regel-/Auswerteeinheit in den Feldgeräten und/oder der Leitstelle vorgesehen ist, die mittels Vergleich der im Prozesszustandsvektor abgespeicherten Information der Messwerte und/oder Stellwerte weiterer Feldgeräte im Prozess eine Plausibilitätsüberprüfung der im aktuellen Feldgerät ermittelten aktuellen Messwerte und/oder aktuellen Stellwerte vornimmt und/oder die die Information des Prozesszustandsvektors zur Funktionsdiagnose des Feldgerätes anwendet, die aus der Information des Prozesszustandsvektors mittels einem vorgegebenen mathematischen Modell die Lebensdauer des Feldgerätes und/oder den Wartungsbedarf des Feldgeräts ermittelt, und /oder die aus den Informationen des Prozesszustandsvektors zumindest eine weitere den Prozess charakterisierende indirekten Messwert analytisch und/oder numerisch ableitet.

Jedes Feldgerät liest die Messwerte mit, die von den anderen Messwerten auf den Feldbus gelegt werden, und speichert diese je nach den Kenngröße, Prioritätskennzeichnung und/oder Zeitstempel an der vordefinierten Stelle in dem Prozesszustandsvektor ab. Der Prozesszustandsvektor wird direkt in den einzelnen Feldgeräten gebildet. Somit wird der Feldbus nicht wie im vorhergehenden Ausführungsbeispiel zusätzlich durch die Versendung des Prozesszustandsvektors von der Leitstelle zeitlich belegt. Wird ein neues Feldgerät während des Betriebs des Prozessautomatisierungssystems am Feldbus oder an einer Zweidraht-Verbindungsleitung initialisiert, so fordert dieses Feldgerät beispielsweise ein anderes Feldgerät oder die Leitstelle auf, den aktuellen Prozesszustandsvektor zu übermitteln. Durch diese Aufforderung, den aktuellen Prozesszustandsvektor zu übermitteln, kann das neue Feldgerät im Prozessautomatisierungssystem direkt nach der Initialisierung im Feldbus und der Übermittlung des Prozesszustandsvektors die Diagnose der Messwerte und der Feldgerätefunktion, sowie die Plausibilitätsüberwachung der Messwerte durchführen.

In einer bevorzugten Ausführungsform der Erfindung ist vorgesehen, dass die einzelnen Feldgeräte die feldgerätespezifischen Messwerte und/oder feldgerätespezifischen Stellwerte über eine Zweidraht-Verbindungsleitung und/oder einen Feldbus an die Leitstelle zyklisch oder auf Anfrage der Leitstelle senden und die Leitstelle die gesammelte Information in der Form des Prozesszustandsvektors zyklisch oder auf Anfrage der Feldgeräte an alle Feldgeräte übermittelt. In dieser Ausgestaltung der Erfindung werden die einzelnen Messwerte eines Prozesses in der Leitstelle gesammelt und in einem Prozesszustandsvektor angeordnet und abgespeichert. Dieser Prozesszustandsvektor wird dann zeitgleich an jedes einzeine Feldgerät übermittelt, so dass in jedem Feldgerät der gleiche Prozesszustandsvektor zur weiteren Verarbeitung vorliegt.

Anhand der im Prozesszustandsvektor abgespeicherten Messwerte weiterer Feldgeräte im Prozess kann eine Plausibilitätsüberprüfung des im aktuellen Feldgerät ermittelten Messwerts vorgenommen werden. Beispielsweise lässt sich bei einer Ermittlung des Abflusses von Füllgut aus dem Behälter durch ein Durchflussmessgerät unter Berücksichtigung der Behältergeometrie auf eine Füllstandsänderung zurückschließen. Die berechnete Füllstandsänderung und die mit einem Füllstandsmessgerät gemessene Füllstandsänderung können mit einander vergleichen werden und somit eine Aussage über die Genauigkeit, und Reproduzierbarkeit des Messwerts gemacht werden.

Einige Prozessgrößen und/oder Zustandsgrößen, wie beispielsweise die Dichte des Füllguts, können nicht direkt mittels eines Sensors ermittelt werden. Die Regel-/Auswerteeinheit im Feldgerät leitet diese Dichte beispielsweise aus mehreren Informationen des Prozesszustandsvektors ab.

In einer besonders bevorzugten Ausführungsform der Erfindung ist vorgesehen, dass im Fall des Einsatzes eines Prozessautomatisierungssystems in zumindest zwei verfahrenstechnischen oder analytischen Prozessen dem Prozesszustandsvektor eine den verfahrenstechnischen oder analytischen Prozess kennzeichnende Kenngröße beigefügt ist, die zur Identifizierung und/oder zur Gruppierung aller ermittelten Messwerte der Feldgeräte des gleichen, verfahrenstechnischen oder analytischen Prozesses vorgesehen ist. Durch diese kennzeichnende Kenngröße ist es möglich die einzelnen Messwerte der verschiedenen Feldgeräte den einzelnen Prozessen zu zuordnen. Hierzu ist vorgesehen, dass diese Kennzeichnung im Feldgerät abgespeichert ist, so dass das Feldgerät einem bestimmten Prozess zugeordnet werden kann. Diese Zuordnung der Messwerte zu einem Prozess ist notwendig, da bei einer Diagnose der Messwerte bzw. der Zustände der Feldgeräte und/oder bei der Plausibilitätsüberprüfung der Messwerte der Feldgeräte untereinander die gleichen Prozessbedingungen und Messbedingungen vorzuliegen haben.

Eine zweckmäßige Ausgestaltung der Erfindung besteht darin, dass in dem Prozesszustandsvektor ein den Zeitpunkt der Ermittlung der Messwerte kennzeichnender Zeitstempel vorgesehen ist. Dieser Zeitstempel wird genutzt, um Messwerte, die zum gleichen Zeitpunkt oder in einem vordefinierten Zeitraum ermittelt wurden, in einem Prozesszustandsvektor zusammen zu fassen. Somit wird gewährleistet, dass ältere Messwerte nicht mit jüngeren Messwerten verglichen werden, falls sich beispielsweise die Prozessbedingungen in der Zwischenzeit verändert haben. Des Weiteren ist für eine Trend- oder Historienermittlung der Messwerte der Zeitpunkt der Bestimmung notwendig, damit eine aussagekräftige und dem Zeitpunkt der Ermittlung zugeordnete Darstellung des Trends oder der Historie der Messwerte durchgeführt werden kann. Zur Bildung des zeitlichen Mittels der Messwerte wird beispielsweise aus den Zeitstempel die Zeitspanne ermittelt, in der die Messwerte zur Mittelwertbildung ermittelt wurden. Außerdem lassen sich durch die Zuordnung der Messwerte zu dem Zeitpunkt der Erfassung zeitliche Signalverläufe und Trends ermitteln. Aus diesem Trend kann beispielsweise auch eine Aussage über das Alterungsverhalten des Sensors oder Aktors getroffen werden.

Gemäß einer vorteilhaften Ausführungsform des erfindungsgemäßen Prozessautomatisierungssystems wird vorgeschlagen, dass die einzelnen Messwerte und/oder Stellwerte der Prozessgrößen und/oder Zustandsgrößen an vorgegeben Stellen in dem Prozesszustandsvektor angeordnet sind. Durch die einheitliche Anordnung der verschiedenen Messwerte, wie z.B. Druck, Temperatur, Füllstand, Durchfluss, pH-Wert, Leitfähigkeit und Viskosität, in dem Prozesszustandsvektor wird festgelegt, an welcher Stelle im Prozesszustandsvektor welcher Messwert steht. Daher müssen dem Messwert im Prozesszustandsvektor beispielsweise nicht die Einheit zur Identifizierung des Messwerts mitgegeben werden. In dem Feldgerät ist hinterlegt, an welcher Stelle im Prozesszustandsvektor der spezifische Messwert mit welcher Einheit und Größenordnung abgelegt ist. Kann in einem Prozess ein bestimmter Messwert aufgrund, beispielsweise des fehlenden Feldgeräts, nicht ermittelt werden, wird an dessen Stelle im Prozesszustandsvektor ein Nullwert oder eine entsprechende Kennzeichnung, dass kein Messwert vorliegt, abgelegt.

Eine ergänzende Ausgestaltung der Erfindung besteht darin, dass eine Prioritätenkennzeichnung der Messwerte vorgesehen ist, die Rangfolge der Eintragung des Messwerts oder des Stellwerts in den Prozesszustandsvektor bei mehreren Messwerten oder Stellwerte einer einzigen Prozessgröße festlegt. Beispielsweise wird anhand der Messgenauigkeit, mit der ein Messwert durch ein Feldgerät ermittelt wurde, eine Prioritätskennzeichnung vergeben, die festlegt, welcher Messwert aus einer Vielzahl von Messwerten einer gleichen Prozessgröße, z.B. Temperatur, in den Prozesszustandsvektor eingetragen wird. Desweiteren legt die Prioritätskennzeichnung fest, dass Messwerte einer gleichen Prozessgröße mit einem geringeren Vorrecht im Prozesszustandsvektor durch höherrangige Messwerte überschrieben werden können.

Eine förderliche Ausgestaltung der Erfindung schlägt vor, dass die Regel- and Auswerteinheit die Information des Prozesszustandsvektors verschlüsselt. Durch die Verschlüsselung der Information des Prozesszustandsvektors können nur ausgewählte Feldgeräte die Information des Prozesszustandsvektors mitlesen und wieder entschlüsseln. Durch die Verschlüsselung des Prozesszustandsvektors sind die Informationen und Messwerte über den Prozess geschützt.

Eine vorteilhafte Ausführungsform der Erfindung ist, dass in jedem Feldgerät oder in der Leitstelle eine Historieninformation zeitlich zurückliegender Messwerte und/oder zeitlich zurückliegender Stellwerte mit der aktuellen Information aktueller Messwerte in einer Prozesszustandsmatrix abgespeichert ist. Zur Bestimmung des zeitlichen Verlaufs und/oder des Trendverhaltens der Mess- und Stellwerte ist es vorteilhaft, die aktuellen und zeitlich zurückliegenden Werte in einer festgelegten Form vorliegen zu haben.

In einer vorteilhaften Ausführungsform der Erfindung wird vorgeschlagen, dass die Regel-/Auswerteeinheit aus der aktuellen Information und der Historieninformation die Lebensdauer und/oder den Wartungsbedarf des Feldgeräts ermittelt und/oder die Plausibilität des mit dem Feldgerät ermittelten aktuellen Messwerts und/oder aktuellen Stellwerte der aktuellen Prozessgröße überprüft und/oder die Funktionsdiagnose des Feldgerätes und/oder das Trendverhalten der Messwerte ermittelt.

Die Erfindung und ausgewählte Ausführungsbeispiele werden anhand der nachfolgenden Zeichnungen näher erläutert. Zur Vereinfachung sind in den Zeichnungen identische Teile mit dem gleichen Bezugszeichen versehen worden.

Es zeigt:

Fig. 1 eine schematische Darstellung eines erfindungsgemäßen Prozessautomatisierungssystems.

Fig. 2 eine schematische Darstellung eines Feldgeräts oder einer Leitstelle mit einer Regel-/Auswerteeinheit zum Erfassen des Prozesszustandsvektors oder einer Prozesszustandsmatrix.

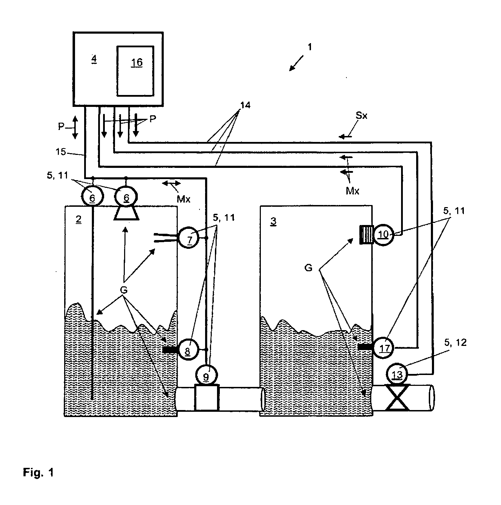

In Fig. 1 ist ein erfindungsgemäße Prozessautomatisierungssystem 1 dargestellt, das aus einer Leitstelle 4 und einer Vielzahl von Feldgeräten 5 in einem Behälter des ersten Prozesses 2 und in einem Behälter des zweiten Prozesses 3 aufgebaut ist. Die einzelnen Feldgeräte 5 kommunizieren untereinander und mit der Leitstelle 4 über einen Feldbus 15 und/oder eine Zweidraht-Verbindungsleitung 14. In der Leitstelle 4 ist eine Regel- and Auswerteeinheit 16 integriert, die die Steuerung des Automationsprozesses, die Auswertung der Messwerte Mx oder Stellwerte Sx der einzelnen Feldgeräte 5 und/oder Analyse und Diagnose der Information I und der Messwert Mx der Feldgeräte 5 durchführt. Eine Prozessgröße G oder Vorgangsgröße ist eine physikalische Größe, welche ausschließlich bei Zustandsänderungen auftritt und in der Folge wegabhängig ist. Die Messwerte Mx und Stellwerte Sx sind Werte von Prozessgrößen G oder von Zustandsgrößen Z des Prozesses 2, 3 die von dem Sensor 11 oder Aktor 12 der Feldgeräte 5 ermittelt werden.

In dem ersten Prozess 2 sind in Fig. 1 beispielsweise zwei Füllstandsmessgeräte 6, ein Grenzstandsmessgerät 7 und ein analytisches Messgerät 8 eingebracht. Zwischen den Behältern des ersten Prozesses 2 und des zweiten Prozesses 3 ist ein Durchflussmessgerät 9 integriert, welches den Transport des Füllgutes zwischen den beiden Behältern der Prozesse 2, 3 ermittelt. Diese Feldgeräte 5 des ersten Prozesses 2 kommunizieren über einen digitalen Feldbus 15, wie z.B. Profibus PA oder Fieldbus, miteinander und/oder mit einer Leitstelle 4. Analog zur leitungsgebundenen Kommunikation über einen digitalen Feldbus 15 kann die Kommunikation auch über eine entsprechende drahtlose Kommunikationseinheit nach einem der bekannten Standards, wie z.B. ZigBee, WLan, Bluthooth, ausgestaltet sein. Dies ist in dem gezeigten Ausführungsbeispiel aus Fig. 1 jedoch nicht explizit ausgeführt.

In dem zweiten Prozess 3 sind beispielsweise als Feldgeräte 5 ein Druckmessgerät 10, ein Temperaturmessgerät 17 und ein Stellantrieb 13 zur Ansteuerung eines Ventils integriert, welche über eine direkte Zweidraht-Verbindungsleitung 14 mit der Leitstelle 14 oder untereinander kommunizieren. Die Kommunikation über die Zweidraht-Verbindungsleitung 14 erfolgt beispielsweise nach dem HART-Standard, welcher auf ein analoges 4-20 mA Stromsignal ein digitalisiertes, hochfrequentes Signal als weiteren Informationsträger aufmoduliert.

Nach heutigem Stand sind nur Messwerte Mx und/oder Informationen I über den Prozess 2, 3 bekannt die im oder vom Feldgerät 5 selbst ermittelt werden, jedoch reichen diese Informationen I über den Prozess 2, 3 zur Berechnung des Wartungsbedalfs oder der Lebensdauer des Feldgeräts 5 nicht aus. Um heutzutage bei Feldgeräten 5 eine Aussge über deren Lebensdauer oder Wartungsbedarf zu erhalten, werden einerseits Informationen I aus den direkt im Feldgerät 5 vorhandenen Messwerten Mx abgeleitet. Andererseits sind aber auch weitere Messwerte Mx anderer Prozessgrößen G und/oder Zustandsarößen Z für eine exakte und/oder erweiterte Diagnosefunktion des Feldgeräts 5 notwendig, welche nicht direkt oder indirekt mittels des einen Sensors 11 im Feldgerät 5 gemessen werden können. Desweiteren ist es aus Kosten- und/oder Platzgründen meist jedoch nicht möglich, einen zusätzlichen Sensor 11 im Feldgerät 5 zur Messung der für die Diagnose notwendigen Messwerte Mx einer Prozessgröße G in dem Feldgerät 5 zu integrieren. Meist liegen die zusätzlichen Informationen I des Prozesses 2,3 jedoch schon durch weitere, im Prozessautomatisierungssystem 1 verteilte Feldgeräte 5 der einzelnen Prozesse 2,3 vor und müssen nur entsprechend bereitgestellt werden. Eine Stelle im Prozessautomatisierungssystem 1, an dem allen Informationen I des Prozesses 2,3 zusammen laufen, ist beispielsweise die Leitstelle 4. An der Leitstelle 4 können unterschiedliche Feldgeräte 5 von verschiedenen Herstellern angeschlossen sein. Die Algorithmen zur Ausführung der Berechnungsfunktionen und Diagnosefunktionen im Feldgerät 5 sind nur dem Hersteller des Geräts bekannt. Es ist somit ein Nachteil die gerätespezifischen Algorithmen der Berechnungsfunktionen und Diagnosefunktionen direkt in der Leitstelle 4 zu implementieren, da es dadurch notwendig wird alle gerätespezifischen Algorithmen der unterschiedlichen Feldgeräten 5 von verschiedenen Herstellern in der Leitstelle 4 abzulegen und bei Bedarf aufzurufen. Aus diesen Gründen ist es von Vorteil, die Berechnung der Lebensdauer und der Diagnose direkt in den Feldgeräten 5 zu implementieren, da in diesem Fall nur der eine gerätespezifische Algorithmus der Berechnungsfunktionen und Diagnosefunktionen im Feldgeräte 5 vorhanden sein muss. Jedoch ist es dadurch auch notwendig, dass dem Feldgeräte 5 alle zur Ausführung des Algorithmus notwendigen Informationen I des Prozesses P zur Verfügung stehen. Eine erste Ausgestaltungsform der Erfindung ist es deshalb, dass in der Leitstelle 4 alle Messwerte Mx als Information I in der Form eines vereinheitlichten Prozesszustandsvektors P gesammelt werden und dieser vereinheitlichte Prozesszustandsvektor P an die Feldgeräte 5 des Prozesses 2,3 übermittelt wird. In den Feldgeräte 5 können beispielsweise mittels der zusätzlichen Information I aus dem gebildeten Prozesszustandsvektor P Berechnungen zur Lebensdauer des Sensors 11 oder des Feldgeräts 5 oder für eine Plausibilitätsbestimmung des Messwerts Mx des Feldgeräts 5 durchgeführt werden. Des Weiteren ist es möglich durch den direkten Vergleich der verschieden Messwerte Mx einer gemeinsamen Prozessgrößen G den Messfehler, und/oder Messunsicherheit der Messung zu verringern. Jedem Feldgerät 5 steht getrennt nach den Prozessen dieselbe Information I als vereinheitlichter Prozesszustandsvektor P zur Verfügung. Die Zuordnung der Feldgeräte 5 zu den einzelnen Prozessen 2,3 erfolgt beispielsweise mittels einer den verfahrenstechnischen oder analytischen Prozess kennzeichnende Kenngröße K, die den Messwerten Mx auf dem Feldbus 15 oder der Zweidraht-Verbindungsleitung 14 beigeordnet sind und die somit eine Zuordnung der einzelnen Messwerte Mx zu dem den jeweiligen Prozess 2, 3 beschreibenden Prozesszustandsvektor P ermöglicht. Vorteil dieser Ausgestaltung ist, dass der Betreiber eines Prozessautomatisierungssystems nicht genau wissen muss, welche zusätzliche Infoformation I von den einzelnen angeschlossenen Feldgeräts 5 benötigt wird, sondern das Feldgeräte beschafft sich die notwendige zusätzliche Information I selbst aus einem einheitlichen Prozesszustandsvektor P.

In einer zweiten Ausgestaltungsform der Erfindung werden die Messwerte Mx der einzelnen Feldgeräte 5 eines einzelnen Prozesses 2, 3 nach einem standardisierten Sendeprotokoll, wie z.B. nach Profibus PA oder Fieldlbus Foundation, über den digitalen Feldbus 15 übertragen. Die entsprechenden Messwerte Mx werden von jedem einzelnen Feldgerät 5 auf dem digitalen Feldbus 15 mitgelesen und in einer Regel-Auswerteinheit 16 im Speicher als ein Prozesszustandsvektor P abgespeichert. Das automatische Mitlesen der unterschiedlichen Messwerte Mx auf dem digitalen Feldbus 15 und das automatische Einordnen der unterschiedlichen Messwerte Mx in einen Prozesszustandsvektor P ist erst dadurch möglich, dass die unterschiedlichen Messwerte Mx eindeutig identifizierbar sind. Dieses kann durch einen systemweite eindeutige Identifikator, wie z.B. eine Busadresse des Feldgeräts 5, erfolgen, indem dem Identifikator eine für das Feldgeräte 5 bzw. den Sensor 11 physikalisch/chemisch Messgröße und deren Dimension, wie z.B. Temperatur in Grad Celsius, zugeordnet wird.

Alternativ können die unterschiedlichen Messwerte Mx eines Prozesses 2, 3 auf dem digitalen Feldbus durch einen den Messwert Mx spezifizierendes Bezeichnungselement gekennzeichnet werden. Die Messwerte Mx und Stellwerte Sx die über die Zweidraht-Verbindungsleitung 14 oder den Feldbus 15 an die weiteren Feldgeräte 5 und/oder die Leitstelle 4 übermittelt werden, ist ein Bezeichnungselement zugeordnet, anhand der die Messwerte Mx in der Dimension und Maßeinheit der entsprechenden Prozessgröße G zugeordnet sind. Beispielsweise wird bei der Übermittlung der Temperatur als Messwert die Einheit Grad Celsius und die Größenordnung 1 als Bezeichnungselement des Messwerts Mx über den Feldbus 15 oder die Vierdraht-Verbindungsleitung 14 mit gesendet. Es ist auch möglich, dass als Bezeichnungselement eine vordefinierte Variablen über den Feldbus 15 oder die Zweidraht-Verbindungsleitung 14 übermittelt wird, die in dem Feldgerät 4 im Zusammenhang mit einer den Messwert Mx charakterisierenden Einheit und einer Größenordnung des entsprechenden Messwerts Mx in der Regel- and Auswerteeinheit 16 hinterlegt ist.

Die spezifischen Messwerte Mx jedes Feldgeräts 5, wie z.B. Temperatur, Druck pH-Wert im Prozess 2, 3, werden durch die Regel- and Auswerteeinheit 16 im Feldgerät des Prozesszustandsvektors P an einer vorgebenden Stelle im Prozesszustandsvektor P abgelegt. Jede Regel- and Auswerteeinheit 16 in einem Feldgerät 5 kennt aufgrund der vereinheitlichten Anordnung der einzelnen, unterschiedlichen Messwerte Mx die Stelle im Prozesszustandvektor, an der der entsprechende Messwert M, wie z. B. der Druckwert, abgelegt ist. Diese zweite Ausgestaltung hat den Vorteil, dass beispielsweise das Wissen über die Berechnung der Lebensdauer in Abhängigkeit aller Prozessgrößen G und/oder Zustandsgrößen Z und/oder Zustandsgrößen Z nicht mehr nur in der Leitstelle 4 berechnet werden kann, sondern dass diese Diagnose und Analyse direkt im und durch das Feldgerät 5 erfolgen kann.

Folgend wird ein Auszug von Anwendungsbeispielen des Prozesszustandsvektors in einem Prozessautomatisierungssystems 1 aufgeführt.

Zusätzlich zur Bestimmung des pH-Werts mittels eines analytischen Messgeräts 8 wird noch der Prozessdruck als Information I berechnet. Daraus lässt sich beispielsweise im Feldgerät 5 der nächste Termin für eine Rekalibrierung oder die Lebensdauer der pH-Elektrode berechnen.

Die Ausbreitungsgeschwindigkeit eines freiabstrahlenden Füllstandsmessgeräts 6 durch Mikrowellen ist druckabhängig. Zur Berechnung der exakten Laufzeit eines Mikrowellen-Impulses und somit zur Bestimmung des exakten Füllstandes eines Füllguts in einem Behälter muss der exakte Druck im Prozess 2, 3 bekannt sein. Aus dem Prozesszustandsvektor P liest das Füllstandsmessgerät 6 den Messwert Mx des Drucks des Druckmessgeräts 10 aus demselben Prozess 2, 3 ab. Somit wird eine exakte Messung des Füllstands unter der Kenntnisnahme des exakten Drucks im Prozess 2, 3 ermöglicht.

Bei einem Füllstandsmessgerät 6, das den Füllstand in einem Behälter des Prozesses 2, 3 mittels der Laufzeit eines Ultraschall-Impulses bestimmt, ist in dem Ultraschallwandler ein Temperatursensor zur Bestimmung der Temperatur des Prozesses 2, 3 integriert. Durch einen Messwert Mx der Temperatur aus dem Prozesszustandsvektor P beispielsweise eines Temperaturmessgeräts 17 in dem gleichen Prozess ist es möglich, eine Plausibilitätsbestimmung des mit dem Temperatursensor des Ultraschallwandlers ermittelten Messwert vorzunehmen. Wenn die Verteilung der Feldgeräte 5 auf Prozesse 2, 3 bekannt ist, dann kann auch eine Plausibilität zwischen den Messwerten Mx bestimmt werden.

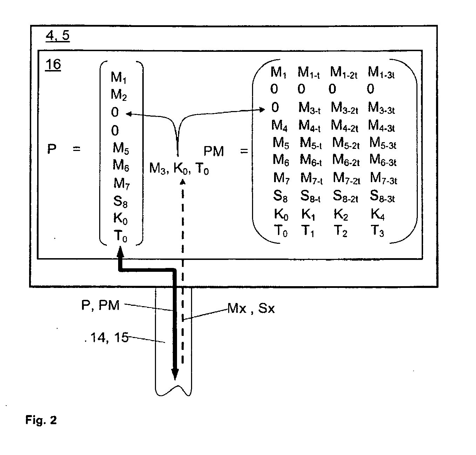

In Fig. 2 ist die Erzeugung eines Prozesszustandsvektor P und/oder einer Prozesszustandsmatrix PM in der Regel-/Auswerteeinheit 16 in einem Feldgerät 5 oder in einer Leitstelle 4 dargestellt. Über den Feldbus 15 oder die Zweidraht-Verbindungsleitung 14 werden die einzelnen Messwerte Mx und/oder Stellwerte Sx gesammelt und an der entsprechenden Stelle in dem Prozesszustandsvektor P oder in der Prozesszustandsmatrix PM abgelegt. Anhand der Kenngröße Kx und des Zeitstempels Tx werden die Messwerte Mx oder die Stellenwerte Sx der Prozesse 2, 3 dem entsprechenden Prozesszustandsvektor P bzw. einer Spalte in der Prozesszustandsmatrix PM zugeordnet. Der Erfassungszeitpunkt bzw. Erfassungszeitraum der Ermittlung der in dieser Spalte befindlichen Messwerte Mx und/oder Stellewerte wird beispielsweise als Zeitstempel in der letzten Reihe der entsprechenden Spalte abgespeichert, so dass der zeitliche Verlauf der ermittelten Messwerten Mx und Stellwerten Sx in der Prozesszustandsmatrix PM bestimmt werden kann. Die Messwerte Mx-t und/oder die Stellenwerte Sx-t sind entsprechend der Zuordnung zu einem aktuellen Zeitstempel Tx gekennzeichnet. Wie schon zuvor beschrieben, werden die Messwerte Mₓ und/oder die Stellewerte Sx entweder direkt auf dem Feldbus 15 von den angeschlossenen Feldgeräten 5 mitgelesen und in den Feldgeräten 5 und an der zugehörigen Stelle im Prozesszustandsvektor P oder der Prozesszustandsmatrix PM abgespeichert. Oder die Messwerte Mx und Stellwerte Sx werden in einer zentralen Einheit, z.B. der Leistelle 4, als Prozesszustandsvektor P oder Prozesszustandsmatrix PM gesammelt und der gesamte Prozesszustandsvektor P oder die gesamte Prozesszustandsmatrix PM wird über den Feldbus 15 oder die Zweidraht-Verbindungsleitung 14 zurück an die einzelnen Feldgeräte 4 aeschickt. So liegen in jedem Feldgerät 4 alle ermittelbaren Messwerte Mx und/oder alle einstellbaren Stellwerte Sx der Zustandsgrößen Z und/oder Prozessgrößen G des Prozesses 2, 3 zeitgleich und konform vor.

### Bezugszeichenliste

**Tabelle 1**

| | |
|---|---|
| 1 | Prozessautomatisierungssystem |
| 2 | erster Prozess / erster Behälter |
| 3 | zweiter Prozess / zweiter Behälter |
| 4 | Leitstelle |
| 5 | Feldgerät |
| 6 | Füllstandsmessgerät |
| 7 | Grenzstandsmessgerät |
| 8 | Analytisches Messgerät |
| 9 | Durchflussmessgerät |
| 10 | Druckmessgerät |
| 11 | Sensor |
| 12 | Aktor |
| 13 | Stellantrieb |
| 14 | Zweidraht-Verbindungsleitung |
| 15 | digitaler Feldbus, Feldbus |
| 16 | Regel-/Auswerteeinheit |
| 17 | Temperaturmessgerät |
| | |
| P | Prozesszustandsvektor |
| PM | Prozesszustandsmatrix |
| I | Information |
| Mₓ, Mx, Mx-t | Messwert |
| Sₓ, Sx, Sx-t | Stellwert |
| G | Prozessgröße |
| Z | Zustandsgröße |
| V | Prioritätskennzeichnung |
| Kₓ, Kx | Kenngröße |
| Tₓ, Tx | Zeitstempel, Zeitpunkt der Messwerterfassung |
| W | Indirekter Messwert |

## Patentansprüche

1. Prozessautomatisierungssystem (1) zur Bestimmung, zur Überwachung und/oder zum Beeinflussen von unterschiedlichen Prozessgröβen (G) und/oder Zustandsgrößen (Z) in zumindest einem verfahrenstechnischen oder analytischen Prozess (2, 3) mit zumindest einer Leitstelle (4) und einer Vielzahl von Feldgeräten (5), die die Prozessgrößen (G) und/oder Zustandsgrößen (Z) messen, überwachen oder beeinflussen,
- wobei in jedem Feldgerät (5) zumindest ein Sensor (11) zum Ermitteln eines Messwerts (Mx) einer bestimmten Prozessgröße (G) und/oder Zustandsgröße (Z) und/oder ein Aktor (12) zum Beeinflussen einer bestimmten Prozessgrößen (G) und/oder Zustandsgröße (Z) mittels eines Stellwerts (Sx) vorgesehen ist,
- wobei jedes Feldgerät (5), die zyklisch oder azyklisch ermittelten, messgerätespezifischen Messwerte (Mx) und/oder Stellwerte (Sx) der Prozessgröße (G) und/oder Zustandsgrößen (Z) jedem weiteren Feldgerät (5) des Prozessautomatisierungssystems (1) zur Verfügung stellt, so dass jedem Feldgerät (5) alle ermittelten Messwerte (Mx) und/oder Stellewerte (Sx) des verfahrenstechnischen oder analytischen Prozesses (2, 3) als Information (I) verfügbar sind,
- wobei die jeweils aktuelle Information (I) aller ermittelten Messwerte (Mx) und/oder Stellwerte (Sx) der Prozessgrößen (G) und/oder Zustandsgrößen (Z) jedem Feldgerät (5) als ein aktueller Prozesszustandsvektor (P) zur Verfügung steht,
**dadurch gekennzeichnet,**
- **dass** ein digitaler Feldbus (15) vorgesehen ist, über den die Feldgeräte (5) mit der Leitstelle (4) und untereinander kommunizieren, wobei jedes der Feldgeräte (5) die von den anderen Feldgeräten (5) des verfahrenstechnischen oder analytischen Prozesses (2, 3) auf dem digitalen Feldbus (15) bereitgestellten Messwerte (Mx) und/oder Stellwerte (Sx) kontinuierlich oder zyklisch mitliest und diese mitgelesenen Messwerte (Mx) und/oder mitgelesenen Stellwerte (Sx) als Information (I) an vorgegebener Stelle im Prozesszustandsvektor (P) aufgrund einer einheitlichen Anordnung der einzelnen, unterschiedlichen Messwerte (Mx) und/oder Stellwerte (Sx) im Prozesszustandvektor (P) eindeutig identifizierbar abspeichert,
- **dass** eine Regel-/Auswerteeinheit (16) in den Feldgeräten (5) und/oder der Leitstelle (4) vorgesehen ist,
o die mittels Vergleich der im Prozesszustandsvektor (P) abgespeicherten Information (I) der Messwerte (Mx) und/oder Stellwerte (Sx) weiterer Feldgeräte (5) im Prozess (2, 3) eine Plausibilitätsüberprüfung der im aktuellen Feldgerät (5) ermittelten aktuellen Messwerte (Mx) und/oder aktuellen Stellwerte (Sx) vornimmt und/oder die die Information (I) des Prozesszustandsvektors (P) zur Funktionsdiagnose des Feldgerätes (5) anwendet,.
○ die aus der Information (I) des Prozesszustandsvektors (P) mittels einem vorgegebenen mathematischen Modell die Lebensdauer des Feldgerätes (5) und/oder den Wartungsbedarf des Feldgerätes (5) ermittelt, und /oder
o die aus den Informationen (I) des Prozesszustandsvektors (P) zumindest eine weitere den Prozess (2, 3) charakterisierende indirekten Messwert (W) analytisch und/oder numerisch ableitet.

2. Prozessautomatisierungssystem nach Anspruch 1,
wobei die einzelnen Feldgeräte (5) die feldgerätespezifischen Messwerte (Mx) und/oder feldgerätespezifischen Stellwerte (Sx) über eine Zweidraht-Verbindungsleitung (14) und/oder einen Feldbus (15) an die Leitstelle (4) zyklisch oder auf Anfrage der Leitstelle (4) senden und wobei die Leitstelle (4) die gesammelte Information (I) in der Form des Prozesszustandsvektors (P) zyklisch oder auf Anfrage der Feldgeräte (5) an alle Feldgeräte (5) übermittelt.

3. Prozessautomatisierungssystem nach Anspruch 1,
wobei im Fall des Einsatzes eines Prozessautomatisierungssystems (1) in zumindest zwei verfahrenstechnischen oder analytischen Prozessen (2, 3) dem Prozesszustandsvektor (P) eine den verfahrenstechnischen oder analytischen Prozess (2, 3) kennzeichnende Kenngröße (Kx) beigefügt ist, die zur Identifizierung und/oder zur Gruppierung aller ermittelten Messwerte (Mx) der Feldgeräte (5) des gleichen, verfahrenstechnischen oder analytischen Prozesses (2, 3) vorgesehen ist.

4. Prozessautomatisierungssystem nach Anspruch 1,
wobei in dem Prozesszustandsvektor (P) ein den Zeitpunkt der Ermittlung der Messwerte kennzeichnender Zeitstempel (Tx) vorgesehen ist.

5. Prozessautomatisierungssystem nach Anspruch 1,
wobei die einzelnen Messwerte (Mx) und/oder Stellwerte (Sx) der Prozessgrößen (G) und/oder Zustandsgrößen (Z) an vorgegebenen Stellen in dem Prozesszustandsvektor (P) angeordnet sind.

6. Prozessautomatisierungssystem nach Anspruch 1,
wobei eine Prioritätenkennzeichnung (V) der Messwerte (Mx) vorgesehen ist, die Rangfolge der Eintragung des Messwerts (Mx) oder des Stellwerts (Sx) in den Prozesszustandsvektor (P) bei mehreren Messwerten (Mx) oder Stellwerten (Sx) einer einzigen Prozessgröße (G) festlegt.

7. Prozessautomatisierungssystem nach zumindest einem der vorhergehenden Ansprüchen,
wobei die Regel- and Auswerteinheit (16) die Information (I) des Prozesszustandsvektors (P) verschlüsselt.

8. Prozessautomatisierungssystem nach Anspruch 1,
wobei in jedem Feldgerät (5) oder in der Leitstelle (4) eine Historieninformation (H) zeitlich zurückliegender Messwerte (Mx) und/oder zeitlich zurückliegender Stellwerte (Sx) mit der aktuellen Information (I) aktueller Messwerte (Mx) und/oder aktueller Stellwerte (Sx) in einer Prozesszustandsmatrix (PM) abgespeichert ist.

9. Prozessautomatisierungssystem nach Anspruch 8,
wobei die Regel-/Auswerteeinheit (16) aus der aktuellen Information (I) und der Historieninformation (H) die Lebensdauer und/oder den Wartungsbedarf des Feldgeräts (5) ermittelt und/oder die Plausibilität des mit dem Feldgerät (5) ermittelten aktuellen Messwerts (Mx) und/oder aktuellen Stellwerte (Sx) der aktuellen Prozessgrößen (G) und/oder Zustandsgrößen (Z) überprüft und/oder die Funktionsdiagnose des Feldgerätes (5) und/oder das Trendverhalten der Messwerte (Mx) ermittelt.

## Claims

1. Process automation system (1) for determining, monitoring and/or manipulating different process variables (G) and/or state variables (Z) in at least one engineering or analytical process (2, 3) with at least one control center (4) and a plurality of field devices (5) which measure, monitor or manipulate the process variables (G) and/or state variables (Z),
- wherein each field device (5) has at least one sensor (11) for determining a measured value (Mx) for a specific process variable (G) and/or state variable (Z), and/or one actuator (12) for manipulating a specific process variable (G) and/or state variable (Z) using a control value (Sx),
- wherein each field device (5) makes the measured values (Mx) and/or control values (Sx), which are cyclically or acylically determined for the process variable (G) and/or state variable (Z) and are specific to each measuring device, available to every other field device (5) in the process automation system (1), and so all measured values (Mx) and/or control values (Sx) determined in the engineering or analytical process (2, 3) are available as information (I) to each field device,
- wherein the current information (I) for each measured value (Mx) and/or control value (Sx) determined for the process variables (G) and/or state variables (Z) is available to each field device (5) as a current process state vector (P),
**characterized in that**
- a digital fieldbus (15) is provided, via which the field devices (5) communicate with the control center (4) and with each other, wherein each field device (5) reads continuously or cyclically the measured values (Mx) and/or control values (Sx) provided on the digital fieldbus (15) by the other field devices (5) in the engineering or analytical process (2, 3) and stores these read measured values (Mx) and/or read control values (Sx) as information (I) at a specified point in the process state vector (P) and in a clearly identifiable manner on the basis of a uniform arrangement of the individual, diverse measured values (Mx) and/or control values (Sx) in the process state vector (P).
- a control/evaluation unit (16) is provided in the field devices (5) and/or the control center (4),
○ which, by comparing the information (I) stored in the process state vector (P) and pertaining to the measured values (Mx) and/or control values (Sx) of additional field devices (5) in the process (2, 3), carries out a plausibility test on the current measured values (Mx) and/or current control values (Sx) determined in the current field device (5), and/or which uses the information (I) in the process state vector (P) to carry out a functional diagnosis of the field device (5),
o which uses a specified mathematical model to determine the operating life of the field device (5) and/or the maintenance requirements of the field device (5) on the basis of the information (I) in the process state vector (P), and/or
o which deduces analytically and/or numerically from the information (I) in the process state vector (P) at least one additional indirect measured value (W) which characterizes the process (2, 3).

2. Process automation system as claimed in Claim 1,
wherein the individual field devices (5) transmit the field-device-specific measured values (Mx) and/or field-device-specific control values (Sx) to the control center (4) cyclically or at the request of the control center (4) via a two-wire connection cable (14) and/or a fieldbus (15), and wherein the control center (4) transmits the assembled information (I) in the form of a process state vector (P) cyclically or at the request of the field devices (5) to all field devices (5).

3. Process automation system as claimed in Claim 1,
wherein if a process automation system (1) is used in at least two engineering or analytical processes (2, 3), a variable (Kx) denoting the engineering or analytical process (2, 3) is added to the process state vector (P), the purpose of this variable being to identify and/or group all measured values (Mx) determined by field devices (5) in the same engineering or analytical process (2, 3).

4. Process automation system as claimed in Claim 1,
wherein a time stamp (Tx) denoting the time at which the measured values were determined is provided in the process state vector (P).

5. Process automation system as claimed in Claim 1,
wherein the individual measured values (Mx) and/or control values (Sx) for the process variables (G) and/or state variables (Z) are arranged at specified points in the process state vector (P).

6. Process automation system as claimed in Claim 1,
wherein a priority identification (V) is provided for the measured values (Mx), which sets the priority for entering the measured value (Mx) or control value (Sx) in the process state vector (P) in cases where there is a plurality of measured values (Mx) or control values (Sx) for a single process variable (G).

7. Process automation system as claimed in at least one of the previous claims,
wherein the control and evaluation unit (16) encrypts the information (I) contained in the process state vector (P).

8. Process automation system as claimed in Claim 1,
wherein in each field device (5) or in the control center (4), history information (H) pertaining to measured values (Mx) which date back in time and/or control values (Sx) which date back in time, is stored in a process state matrix (PM) together with the current information (I) for current measured values (Mx) and/or current control values (Sx).

9. Process automation system as claimed in Claim 8,
wherein the control/evaluation unit (16) uses the current information (I) and the history information (H) to determine the service life and/or maintenance requirements of the field device (5) and/or tests the plausibility of the current measured value (Mx) and/or current control values (Sx) determined by the field device (5) for the current process variable (G) and/or state variable (Z) and/or determines the functional diagnosis of the field device (5) and/or trends in measured values (Mx).

## Revendications

1. Système d'automatisation des process (1) destiné à la détermination, la surveillance et/ou l'influence de différentes grandeurs process (G) et/ou grandeurs d'état (Z) dans au moins un process (2, 3) technologique ou analytique avec au moins un système numérique de contrôle commande (4) et un grand nombre d'appareils de terrain (5), qui mesurent, surveillent ou influencent les grandeurs (G) et/ou les grandeurs d'état (Z),
- pour lequel est prévu dans chaque appareil de terrain (5) au moins un capteur (11) destiné à la détermination d'une valeur mesurée (Mx) d'une grandeur process (G) et/ou d'une grandeur d'état (Z) et/ou d'un actionneur (12) déterminé, destiné à l'influence d'une grandeur process (G) et/ou d'une grandeur d'état (Z) déterminée au moyen d'une valeur de réglage (Sx),
- pour lequel chaque appareil de terrain (5) met à disposition à tout autre appareil de terrain (5) du système d'automatisation des process (1) les valeurs mesurées (Mx) spécifiques aux appareils de mesure, et/ou les valeurs de réglage (Sx) de la grandeur process (G) et/ou de la grandeur d'état (Z), déterminées de façon cyclique ou acyclique, si bien que chaque appareil de terrain (5) dispose de l'ensemble des valeurs mesurées (Mx) et/ou valeurs de réglage (Sx) déterminées au sein du process (2, 3) technologique ou analytique en tant qu'information (I),
- pour lequel l'information (I) actuelle de l'ensemble des valeur mesurées (Mx) et/ou valeurs de réglage (Sx) des grandeurs process (G) et/ou des grandeurs d'état (Z) est disponible dans chaque appareil de terrain (5) en tant que vecteur d'état de process (P) actuel,
**caractérisé en ce**
- **qu'**est prévu un bus de terrain (15) numérique, par l'intermédiaire duquel les appareils de terrain (5) communiquent avec le système numérique de contrôle commande (4) et entre-eux, chacun des appareils de terrain (5) lisant de façon continue ou cyclique les valeurs mesurées (Mx) et/ou les valeurs de réglage (Sx) mises à disposition par les autres appareils de terrain (5) du process (2, 3) technologique ou analytique sur le bus de terrain (15) numérique, et enregistrant de façon clairement identifiable ces valeurs mesurées (Mx) lues et/ou ces valeurs de réglage (Sx) en tant qu'information (I) à l'endroit prédéfini au sein du vecteur d'état de process (P) grâce à une disposition uniforme des différentes valeurs mesurées (Mx) et/ou valeurs de réglage (Sx) individuelles dans le vecteur d'état de process (P),
- **qu'**est prévue une unité de régulation / d'exploitation (16) dans les appareils de terrain (5) et/ou dans le système numérique de contrôle commande (4),
° qui, au moyen d'une comparaison de l'information (I), enregistrée dans le vecteur d'état de process (P), des valeurs mesurées (Mx) et/ou valeurs de réglage (Sx) d'autres appareils de terrain (5) au sein du process (2, 3), procède à un contrôle de plausibilité des valeurs mesurées (Mx) actuelles et des valeurs de réglage (Sx) actuelles déterminées dans l'appareil de terrain (5) actuel, et/ou qui utilise l'information (I) du vecteur d'état de process (P) à des fins de diagnostic fonctionnel de l'appareil de terrain (5),
° qui détermine à partir de l'information (I) du vecteur d'état de process (P), au moyen d'un modèle mathématique prédéfini, la durée de vie de l'appareil de terrain (5) et/ou le besoin de maintenance de l'appareil de terrain (5), et/ou
° qui déduit de l'information (I) du vecteur d'état de process (P), de façon analytique ou numérique, au moins une nouvelle valeur mesurée (W) indirecte, caractérisant le process (2, 3).

2. Système d'automatisation des process selon la revendication 1,
pour lequel les différents appareils de terrain (5) envoient les valeurs mesurées (Mx) spécifiques aux appareils de terrain et/ou les valeurs de réglage (Sx) spécifiques aux appareils de terrain par l'intermédiaire d'un câble de liaison bifilaire (14) et/ou d'un bus de terrain (15) au système numérique de contrôle commande (4), de façon cyclique ou sur demande du système numérique de contrôle commande (4), et pour lequel le système numérique de contrôle commande (4) transmet l'information (I) recueillie sous la forme du vecteur d'état de process (P), de façon cyclique ou sur demande des appareils de terrain (5), à l'ensemble des appareils de terrain (5).

3. Système d'automatisation des process selon la revendication 1,
pour lequel, en cas d'utilisation d'un système d'automatisation des process (1) dans au moins deux process (2, 3) technologiques ou analytiques, est ajoutée au vecteur d'état de process (P) une valeur caractéristique (Kx) caractérisant le process (2, 3) technologique ou analytique, laquelle valeur est prévue à des fins d'identification et/ou de regroupement de l'ensemble des valeurs mesurées (Mx) déterminées des appareils de terrain (5) du même process (2, 3) technologique ou analytique.

4. Système d'automatisation des process selon la revendication 1,
pour lequel est prévu, dans le vecteur d'état de process (P), un horodateur (Tx) caractérisant l'instant de détermination des valeurs mesurées.

5. Système d'automatisation des process selon la revendication 1,
pour lequel les différentes valeurs mesurées (Mx) et/ou valeurs de réglage (Sx) des grandeurs process (G) et/ou des grandeurs d'état (Z) sont disposées dans des endroits prédéfinis au sein du vecteur d'état de process (P).

6. Système d'automatisation des process selon la revendication 1,
pour lequel est prévu un marquage de priorité (V) des valeurs mesurées (Mx), qui définit la priorité d'insertion de la valeur mesurée (Mx) ou de la valeur de réglage (Sx) dans le vecteur d'état de process (P) en présence de plusieurs valeurs mesurées (Mx) ou valeurs de réglage (Sx) d'une unique grandeur process (G).

7. Système d'automatisation des process selon au moins l'une des revendications précédentes,
pour lequel l'unité de régulation / d'exploitation (16) code l'information (I) du vecteur d'état de process (P).

8. Système d'automatisation des process selon la revendication 1,
pour lequel est enregistrée dans chaque appareil de terrain (5) ou dans le système numérique de contrôle commande (4) une information historique (H) de valeurs mesurées (Mx) remontant dans le temps et/ou de valeurs de réglage (Sx) remontant dans le temps, avec l'information actuelle (I) des valeurs mesurées (Mx) actuelles et/ou des valeurs de réglage (Sx) actuelles, dans une matrice d'état de process (PM).

9. Système d'automatisation des process selon la revendication 8,
pour lequel l'unité de régulation / d'exploitation (16) détermine à partir de l'information actuelle (I) et de l'information historique (H) la durée de vie et/ou le besoin de maintenance de l'appareil de terrain (5), et/ou contrôle la plausibilité de la valeur mesurée (Mx) actuelle et/ou de la valeur de réglage (Sx) actuelle de la grandeur process (G) actuelle et/ou de la grandeur d'état (Z) actuelle, déterminées avec l'appareil de terrain (5), et/ou détermine le diagnostic fonctionnel de l'appareil de terrain (5) et/ou le comportement tendanciel des valeurs mesurées (Mx).
